# EUROPÄISCHE PATENTSCHRIFT

(11) **EP 1 733 611 B1**
(45) Veröffentlichungstag und Bekanntmachung des Hinweises auf die Patenterteilung: **17.12.2008**
(21) Anmeldenummer: 06115229.4
(22) Anmeldetag: 09.06.2006
(51) Int. Cl.: A01F 12/44

(54) **Sieb für eine Reinigungseinrichtung eines Mähdreschers**
Sieve for the grain cleaning apparatus of a combine harvester
Tamis pour un dispositif de nettoyage de céréales dans une moissonneuse-batteuse

(30) Priorität: 16.06.2005 DE 102005027741
(43) Veröffentlichungstag der Anmeldung: 20.12.2006
(73) Patentinhaber: Deere & Company, Moline, IL 61265-8098 (US)
(72) Erfinder: Weichholdt, Dirk, 57200 Sarreguemines (FR); Grossjohann, Harald, 66482 Zweibrücken (DE)
(74) Vertreter: Holst, Sönke

(56) Entgegenhaltungen:
- DE-A1- 4 325 310
- FR-A3- 2 549 345
- US-A- 3 043 427
- US-A- 4 511 466
- US-A- 6 053 812

## Beschreibung

Die Erfindung betrifft ein Sieb für eine Reinigungseinrichtung eines Mähdreschers, mit einem Siebrahmen, an dem mehrere Sieblamellen um eine Achse drehbar gelagert sind, sowie mit mindestens einer über den Siebrahmen nach unten hinausragenden, gemeinsam mit den Sieblamellen um die Achse bewegbaren Luftleitfläche zur Umleitung eines im Betrieb unterhalb des Siebs vorhandenen Luftstroms nach oben zu den Sieblamellen.

### Stand der Technik

Bei einem Mähdrescher ist in der Regel nach dem Dreschen und Trennen noch etwas Spreu und Kurzstroh mit dem erdroschenen Korn vermischt. Die Reinigungseinrichtung entfernt diese Verunreinigungen aus dem Korn. Bei den meisten Mähdreschern enthält die Reinigungseinrichtung drei Hauptkomponenten: ein Gebläse, ein Obersieb und ein Untersieb. Das Gebläse weist ein eigenes Gehäuse auf, während das Obersieb und das Untersieb an einem Siebkasten angebracht sind.

Ein einstellbares Sieb ist aus einer Reihe sich quer erstreckender Lamellen mit Reihen von Zähnen aufgebaut. Jede dieser Lamellen ist an einer Kurbelwelle befestigt, die einen Kurbelarm aufweist, der sich im Eingriff mit einer sich axial erstreckenden Verstellstange befindet. Durch ein axiales Verschieben der Verstellstange werden alle Lamellen gleichzeitig bewegt, d. h. um ihre Längsachse verschwenkt. Die Siebe werden von unten her vom Gebläse mit einem Luftstrom beaufschlagt, der gemeinsam mit einer Rüttelbewegung des Siebkastens dazu führt, dass leichtere Verunreinigungen durch den Luftstrom nach hinten fort getragen werden, während das schwerere Korn zwischen den Lamellen der Siebe hindurch fällt und das das Untersieb passierende Korn in den Korntank gefördert wird. Das am Ende des Untersiebs anfallende Gemisch aus Korn und Spreu wird als Überkehr wieder einem Dreschvorgang zugeführt, während das am Ende des Obersiebs anfallende Gemisch auf das Feld ausgetragen wird.

Die Lamellen einstellbarer Siebe weisen üblicherweise eine obere, mit Zähnen ausgestattete Hälfte, die sich von der Drehachse schräg nach hinten und oben erstreckt, und eine sich von der Drehachse nach unten erstreckende Hälfte auf. Im Stand der Technik ist es üblich, alle Lamellen eines Siebs gleichartig zu gestalten. Sie weisen demnach alle dieselbe Form, Länge und Breite, Anzahl an Zähnen etc. auf.

Da bei vielen Mähdreschern am stromab liegenden Ende des Siebs ein sich schräg nach vorn und unten erstreckender Förderboden folgt, der im Fall des Untersiebs zum Fördern des Korns zu einer Körnerschnecke dient, die sie einem Elevator zuführt, der es in den Korntank befördert, und der im Fall des Obersiebs zum Fördern der Überkehr zu einer Überkehrschnecke dient, welche unausgedroschene Ährenteile durch einen weiteren Elevator zurück in den Dreschprozess gibt, kann bei derartigen Reinigungseinrichtungen am hinteren Ende des Siebs ein Luftstau entstehen, der dort zu einem höheren Druck und einer höheren Luftgeschwindigkeit des zwischen den Lamellen hindurch führenden Luftstroms führt als im vorderen Bereich des Siebs. Die Abscheidung des Korns von der Spreu und den Kurzstrohanteilen erfolgt demnach im Wesentlichen im hinteren Bereich des Siebs, dessen vorderer Bereich hingegen relativ wenig zur Gesamtdurchsatzleistung des Siebs beiträgt. Der theoretisch mögliche Durchsatz der Reinigung wird in derartigen Fällen nicht erreicht.

In der US 3 043 427 A und der DE 1 607 633 A wird vorgeschlagen, unterhalb der Siebe mehrere quer verlaufende und in Strömungsrichtung gegen die Siebunterseite ansteigende Leitstege anzuordnen. Dadurch sollen den einzelnen Längenbereichen des Siebs Teilluftströme mit den jeweils günstigsten Intensitäten zugeführt werden. Diese Leitstege sind starr befestigt und die Sieblamellen sind nicht verstellbar. Würde man derartige Leitstege an einem Sieb mit verstellbaren Lamellen verwenden, wie in der DE 43 25 310 A vorgeschlagen, hätte das zur Folge, dass sich die Strömungsverhältnisse an den Leitstegen bei einer Verstellung der Sieblamellen ändern, da bei einer größeren Sieböffnung mehr Luft bereits vor den Leitstegen nach oben zwischen den Sieblamellen hindurchströmt als bei einer kleineren Sieböffnung. Die Leitstege hätten somit nur eine relativ geringe Wirkung, wenn die Lamellen geöffnet sind, während ihre Wirkung bei weiter geschlossenen Lamellen relativ groß ist. Eine optimale Luftverteilung kann demnach nur für eine bestimmte, vorgegebene Öffnung der Sieblamellen erreicht werden, so dass eine sinnvolle Anpassungsmöglichkeit der Sieböffnung an unterschiedliche Erntegutarten oder Ernteguteigenschaften, wie Feuchtigkeit oder Durchsatz, nicht vorhanden ist.

Die US 3 374 886 A schlägt vor, unterhalb V-förmiger Siebelemente verstellbare Leitbleche anzuordnen, die den Wind nach oben umlenken. Derartige Leitbleche sind über die gesamte Länge des Siebs verteilt und werden gemeinsam, durch einen einzigen Hebel in ihrer Neigung verstellt. Die Siebelemente selbst weisen keine verstellbaren Lamellen auf. Soll Korn unterschiedlicher Körnergröße verarbeitet werden, erweist sich hier ein Wechsel des Siebs als erforderlich.

Die als gattungsbildend angesehene US 6 053 812 A und die nachveröffentlichte EP 1 591 003 A beschreiben Siebanordnungen mit einem Rahmen und darin um Achsen schwenkbar gelagerten Lamellen, die sich aus einem unteren Abschnitt, der sich bis unter den Rahmen nach unten erstreckt, und einem damit einteilig verbundenen oberen Abschnitt zusammensetzen.

### Aufgabe der Erfindung

Die der Erfindung zu Grunde liegende Aufgabe wird darin gesehen, ein verbessertes Sieb für eine Reinigungseinrichtung bereitzustellen, das bei unterschiedlichen Erntebedingungen eine verbesserte Luftstromverteilung über die Länge des Siebs ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Unter einem Sieb einer Reinigungseinrichtung eines Mähdreschers ist eine nach unten über den Rahmen des Siebs hinaus ragende Luftleitfläche angebracht, die gemeinsam mit den Sieblamellen beweglich ist. Im Betrieb strömt unterhalb des Siebs ein vom Gebläse der Reinigung bereitgestellter Luftstrom entlang, der zum Teil durch die Luftleitfläche nach oben umgelenkt wird und durch die Öffnungsspalte zwischen den Sieblamellen hindurchströmt, die oberhalb der Luftleitfläche angeordnet sind. Bei einer Verstellung der Lamellen um ihre Längsachse, die zu einem veränderten Öffnungsspalt zwischen den Sieblamellen führt, wird demnach gleichzeitig auch der Anstellwinkel der Luftleitfläche verändert, was zu einer geeigneten Anpassung der von der Luftleitfläche nach oben umgelenkten Luft, die durch den Öffnungsspalt zwischen den Sieblamellen hindurchströmt, führt. Eine oder mehrere Luftleitflächen werden nur in einem bezüglich der Luftstromrichtung (= Längsrichtung des Siebs) etwa in der Mitte liegenden Bereich des Siebs bereitgestellt. Dadurch wird etwa auf der halben Länge des Siebs ein hinreichender Anteil des vom Gebläse bereitgestellten Luftstroms nach oben umgelenkt und zwischen den Sieblamellen hindurchgeführt. Die Intensität des unterhalb des rückwärtigen Teils des Siebs verbleibenden Luftstroms wird reduziert, so dass dort nicht mehr die eingangs erwähnten, relativ hohen Luftdrücke und Windgeschwindigkeiten erzielt werden, die zu relativ hohen Verlusten führen.

Im Einzelnen kann die Luftleitfläche mit einer ihr zugeordneten Sieblamelle einteilig ausgeführt sein. Es findet dann eine Sieblamelle Verwendung, deren sich von der Drehachse nach unten erstreckende Hälfte gegenüber konventionellen Sieblamellen abgeändert ist und die Luftleitfläche beinhaltet. Bei einer anderen Ausführungsform sind die Sieblamelle und die Luftleitfläche separate Elemente, die lösbar (z. B. durch Schrauben) oder unlösbar (z. B. durch eine Schweiß-, Löt- oder Klebeverbindung) aneinander befestigt sind. Es besteht auch die Möglichkeit, die Luftleitfläche getrennt von den Sieblamellen am Siebrahmen zu lagern und antriebsmäßig mit dem Verstellantrieb der Sieblamellen zu verbinden.

Werden mehr als eine Luftleitfläche verwendet, kann es sinnvoll sein, sie jeweils gleichartig zu gestalten, was die Anzahl herzustellender und auch für den Servicefall bereitzuhaltender Typen an Luftleitflächen vermindert. Um eine gezielte Verteilung der Luftströme über die Länge des Siebs zu erreichen, erweist es sich hingegen als sinnvoll, Luftleitflächen mit (in Richtung des Luftstroms gemessen) unterschiedlichen Längen und/oder Formen zu verwenden. Bei einer vorteilhaften Ausführungsform sind die Luftleitflächen derart angeordnet, dass ihre Länge in Luftstromrichtung betrachtet zunächst anwächst. Dadurch wird zwischen den über ihnen angeordneten Öffnungsspalten zwischen den Sieblamellen ein gegenüber den in Luftstromrichtung davor angeordneten Öffnungsspalten vergrößerter, aufgrund der Abschattungseffekte der jeweils vorgelagerten Luftleitflächen näherungsweise konstanter Luftstrom erzeugt. Stromab der längsten Luftleitfläche können die Längen der Luftleitflächen wieder abnehmen, was auch zu einer abnehmenden Intensität des Luftstroms durch die über den jeweiligen Luftleitflächen angeordneten Öffnungsspalte führt.

Die Luftleitflächen können in sich flach gestaltet sein, was aus herstellungstechnischen Gesichtspunkten vorteilhaft ist. Sie können auch aerodynamisch vorteilhaft entgegen bzw. in der Luftstromrichtung löffelartig gekrümmt oder abgewinkelt sein. Es besteht auch die Möglichkeit, sie mit einem Querschnitt eines Tragflügels oder eines Tropfens auszustatten.

Die erfindungsgemäßen Luftleitflächen können insbesondere an Obersieben von Reinigungseinrichtungen verwendet werden. Sie können jedoch auch an Untersieben angebracht sein. Sie ermöglichen durch das Umlenken eines Teils des Luftstroms nach oben ein mehr oder weniger kontinuierliches Absinken der Windgeschwindigkeit und des Luftdrucks unterhalb des Siebs in der Luftstromrichtung. Das gilt insbesondere, aber nicht nur, wenn sich an das rückwärtige Ende des Siebs nach unten ein geschlossener Siebkasten bzw. Förderboden zur Förderung der Überkehr zur Überkehrschnecke oder des Korns zur Körnerschnecke anschließt.

### Ausführungsbeispiele

In den Zeichnungen sind fünf nachfolgend näher beschriebene Ausführungsbeispiele der Erfindung dargestellt. Es zeigt:
- Fig. 1: eine schematische seitliche Ansicht eines Mähdreschers mit einer Reinigungseinrichtung,
- Fig. 2: eine vergrößerte, schematische seitliche Ansicht der Reinigungseinrichtung des Mähdreschers aus Figur 1,
- Fig. 3: eine vergrößerte, schematische seitliche Ansicht des mit erfindungsgemäßen Luftleitflächen ausgestatteten Obersiebs der Reinigungseinrichtung aus Figur 2,
- Fig. 4: ein Diagramm zur Druck- und Geschwindigkeitsverteilung des Winds am Obersieb, und
- Fig. 5a bis 5d: verschiedene mögliche alternative Ausführungsformen von Luftleitflächen des Obersiebs.

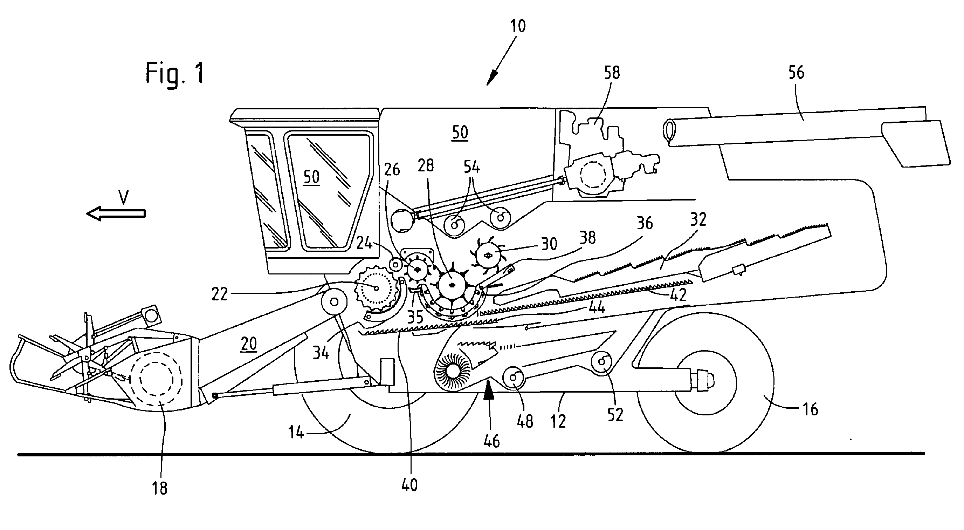

Die Figur 1 zeigt einen selbst fahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

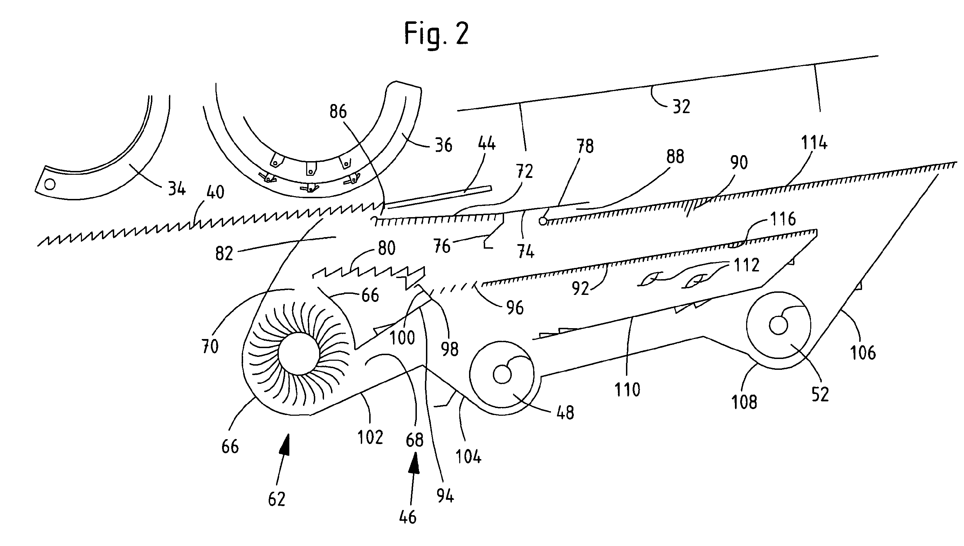

Unterhalb des Mehrtrommeldreschwerks befindet sich ein vorderer Förderboden 40, der im Betrieb eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn, Kurzstroh und Spreu nach hinten, während der hintere Förderboden 42 das durch den Strohschüttler 32 hindurch strömende Gemisch aus Korn, Kurzstroh und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46, die in der Figur 2 detaillierter dargestellt ist. Der hintere Förderboden 42 könnte sein Gemisch auch direkt an die Reinigungseinrichtung 46 abgeben.

Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Die Reinigungseinrichtung 46 ist in der Figur 2 in einer vergrößerten seitlichen Ansicht wiedergegeben. Sie umfasst ein Gebläse 62, das sich aus einem in Drehung (in der Figur 2 im Gegenuhrzeigersinn) versetzbaren Rotor 64 und einem den Rotor 64 umschließenden Gehäuse 66 zusammensetzt. Das Gehäuse 66 hat einen ersten Gebläseauslass 68 und einen zweiten Gebläseauslass 70.

Weiterhin umfasst die Reinigungseinrichtung 46 ein Vorreinigungssieb 72 mit in einem Siebrahmen abgestützten, dort um ihre Längsachse im Winkel verstellbar gelagerten Sieblamellen, das sich unterhalb des Fingerrechens 44 befindet und sich näherungsweise von der rückwärtigen Kante des vorderen Förderbodens 40 horizontal nach hinten und geringfügig nach oben erstreckt. Am rückwärtigen Ende des Vorreinigungssiebs 72 folgt ein geschlossenes Blech 74, das sich in einer schräg nach unten gerichteten Leitfläche 76 fortsetzt, sowie ein hinter dem Blech 74 angeordneter Fingerrechen 78.

Unterhalb der vorderen Hälfte des Vorreinigungssiebs 72 befindet sich ein Förderboden 80, unter dem wiederum der obere Teil des Gehäuses 66 des Gebläses 62 angeordnet ist. Der zweite Gebläseauslass 70 ist schräg nach hinten und oben gerichtet und leitet die Luft in einen ebenfalls nach hinten und oben gerichteten Kanal 82. Ein Teil dieser Luft gelangt zu einer Fallstufe 86, die sich vertikal zwischen dem rückwärtigen Ende des vorderen Förderbodens 40 und dem Vorreinigungssieb 72 befindet, und bewirkt bereits eine gewisse Trennung von schwererem Korn und leichterer Spreu, die nach hinten fort getragen wird. Der übrige Teil der durch den Kanal 82 strömenden Luft erreicht, teilweise umgeleitet durch die Leitfläche 76, die Unterseite des Vorreinigungssiebs 72 und durchströmt es in einer nach hinten und oben gerichteten Strömung. Korn und in einem gewissen Maß auch Spreu fallen zwischen den Sieblamellen des Vorreinigungssiebs 72 hindurch, während das verbleibende Gemisch aus Korn, Kurzstroh und Spreu an der Rückseite des Vorreinigungssiebs 72 durch den Fingerrechen 78 hindurch nach unten fällt.

Dort gelangt es über eine weitere Fallstufe 88 auf ein Obersieb 90, unter dem ein Untersieb 92 angeordnet ist. Das Obersieb 90 und das Untersieb 92 umfassen jeweils in einem Rahmen angeordnete, um ihre Längsachse im Winkel unabhängig voneinander verstellbare Sieblamellen 114 bzw. 116, wie weiter unten näher beschrieben. Zwischen dem vorderen Ende des Untersiebs 92 und einem oberen Leitblech 94, das sich am ersten Gebläseauslass 68 an das Gehäuse 66 anschließt und sich schräg nach hinten und oben erstreckt, ist ein Rost 96 angeordnet. Oberhalb einer dem Rost 96 benachbarten Kante 98 erstreckt sich das obere Leitblech 94 in einem Bereich 100 wiederum schräg nach vorn und oben und endet in der Nähe des rückwärtigen Endes des Förderbodens 80.

Der Rost 90 umfasst in der dargestellten Ausführungsform fünf hintereinander angeordnete, ebene Lamellen, deren Längsachsen sich quer zur Fahrtrichtung V erstrecken. Die Lamellen liegen jeweils in schräg nach hinten und oben verlaufenden Ebenen. Die Länge der Lamellen ist (in Richtung des Luftstroms betrachtet) umso kleiner, je weiter die jeweilige Lamelle vorn angeordnet ist. Die Lamellen sind in einem mit dem Untersieb 92 verbundenen Rahmen (nicht eingezeichnet) befestigt.

Der untere Teil des Gehäuses 66 des Gebläses 62 geht rückwärtig des ersten Gebläseauslasses 68 nach hinten in ein unteres Leitblech 102 über, das unterhalb des Bereichs 100 in einen trichterförmigen Sumpf 104 der Körnerschnecke 48 übergeht. An das rückwärtige Ende des Obersiebs 90 schließt sich ein rückwärtiges Bodenblech 106 an, das sich schräg nach unten und vorn erstreckt und in einen trichterförmigen Sumpf 108 der Überkehrschnecke 52 übergeht. Ein unterer Förderboden 110 erstreckt sich vom rückwärtigen Ende des Untersiebs 92 oberhalb des rückwärtigen Bodenblechs 106 und oberhalb der Überkehrschnecke 52 schräg nach vorn und unten und endet oberhalb des Sumpfs 104 der Körnerschnecke 48. Unterhalb des Untersiebs 92 sind Luftleitbleche 112 angeordnet.

Durch nicht eingezeichnete Antriebe werden die Förderböden 40, 42 und 80 sowie das Vorreinigungssieb 72 mit der Leitfläche 76 und dem Fingerrechen 78, das Obersieb 90, das Untersieb 92 mit dem Rost 96, das Bodenblech 106 sowie der untere Förderboden 110 und vorzugsweise auch die Luftleitbleche 112, die sämtlich durch Schwingen am Rahmen 12 abgestützt sind, durch den Verbrennungsmotor 58 während des Betriebs in eine im Wesentlichen nach vorn und hinten gerichtete Bewegung versetzt. Dazu sind sie in einem in den genannten Richtungen schwingenden Siebkasten angebracht. Sie können sich jeweils gleich- oder zumindest teilweise gegensinnig bewegen. Hierzu wird auf die Offenbarung der DE 30 42 734 C verwiesen, die durch Verweis mit in die vorliegenden Unterlagen aufgenommen wird. Das Gebläse 62 mit seinem Gehäuse 66 sowie die Wände des Kanals 82, das Leitbleche 94 und 102, die Sümpfe 104 und 108 und die Körnerschnecke 48 und die Überkehrschnecke 52 sind jedoch starr mit dem Rahmen 12 verbunden. Die Breite der Reinigungseinrichtung 46 und ihrer Organe entspricht zumindest etwa der Breite des Mehrtrommeldreschwerks und der Strohschüttler 32.

Während des Betriebs erzeugt das Gebläse 62 auch im ersten Gebläseauslass 68 einen Luftstrom, der zum Teil durch den Rost 96 nach hinten und oben hindurchströmt. Der verbleibende Luftstrom aus dem ersten Gebläseauslass 68 gelangt, teilweise geführt durch die Luftleitbleche 112, an die Unterseite des Untersiebs 92 und durchströmt es. Der durch den Rost 96 und das Untersieb 92 tretende Luftstrom gelangt zur Fallstufe 88 und an die Unterseite des Obersiebs 90.

Das Gemisch aus Korn, Kurzstroh und Spreu, das - wie bereits oben erwähnt - an der Rückseite des Vorreinigungssiebs 72 durch den Fingerrechen 78 hindurch oder an seiner Oberseite entlang auf das Obersieb 90 gelangt, wird durch das Obersieb 90 in an sich bekannter Weise durch den Luftstrom und die Sieblamellen 114 gereinigt. Das durch das Obersieb 90 hindurch tretende Gemisch aus Korn und Spreu gelangt auf das Untersieb 92, während die verbleibende Spreu und das Kurzstroh durch den Luftstrom nach hinten abgefördert und vorzugsweise durch den bereits erwähnten Spreuverteiler oder Strohhäcksler aus dem Mähdrescher 10 ausgetragen wird. Das Gemisch aus Spreu und Korn auf dem Untersieb 92 wird durch das Untersieb 92 ebenfalls in an sich bekannter Weise gereinigt, wobei das zwischen den Sieblamellen 116 des Untersiebs 92 hindurch tretende Korn durch den unteren Förderboden 110 zur Körnerschnecke 48 und in den Korntank 50 gelangt. Die Überkehr wird an der Rückseite des Untersiebs 92 durch das Bodenblech 106 zur Überkehrschnecke 52 verbracht.

Das ebenfalls bereits oben erwähnte Gemisch aus Korn und Spreu, das die Sieblamellen des Vorreinigungssiebs 72 passiert, fällt zum Teil direkt (das den rückwärtigen Bereich des Vorreinigungssiebs 72 durchströmende Gemisch) und zum Teil über den Förderboden 80 (das den vorderen Bereich des Vorreinigungssiebs 72 durchströmende Gemisch) oberhalb des Gebläses 62 auf den Rost 96. Das auf dem Rost 96 liegende Gemisch aus Korn und Spreu wandert entlang der Oberseite des Rosts 96 nach hinten und gelangt anschließend auf das Untersieb 92, auf dem es in der oben erwähnten Weise in Korn und Überkehr getrennt wird. Der durch den Rost 96 nach oben und hinten strömende Luftstrom bewirkt eine Auflockerung des Gemischs und führt leichtere Partikel (Spreu) mit sich mit. Auf das Untersieb 92 gelangt daher ein aufgelockertes und in einem gewissen Maße weiter vorgereinigtes Gemisch.

Der Rost 96 könnte einen Teil des in dem Gemisch enthaltenen Korns direkt nach unten durchlassen, so dass sie in den trichterförmigen Sumpf 104 der Körnerschnecke 48 bzw. seine nach vorn ansteigende Verlängerung fallen und von dort direkt in den Korntank 50 transportiert werden. Dieses Korn belastet das Untersieb 92 demnach nicht.

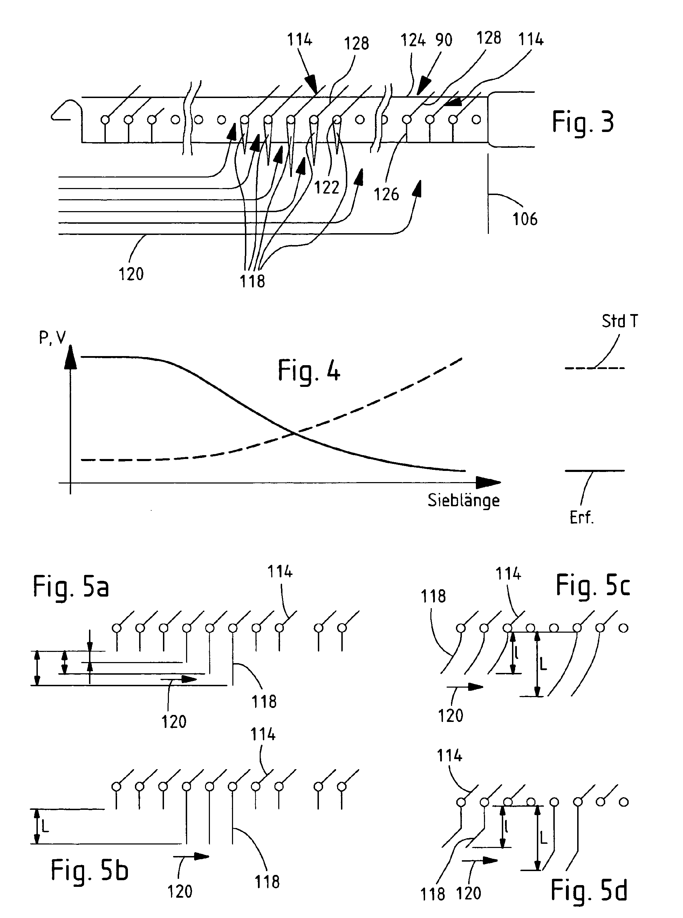

An der Rückseite des Obersiebs 90 ist der Siebkasten durch das an das rückwärtige Ende des Obersiebs 90 nach unten anschließende rückwärtige Bodenblech 106 geschlossen. Dadurch entsteht unterhalb des rückwärtigen Bereichs des Obersiebs, insbesondere bei relativ kleinen Öffnungsspalten zwischen den Sieblamellen 114, ein recht hoher Luftdruck, der wiederum im rückwärtigen Bereich des Obersiebs 90 zu hohen Luftgeschwindigkeiten durch die Öffnungsspalte zwischen den Sieblamellen 114 führt, die wiederum unerwünscht hohe Verluste bedingen. Um diesen Nachteil zu vermeiden, sind etwa in der Mitte des Obersiebs 90 eine Reihe an Luftleitflächen 118 vorgesehen, wie sie in der Figur 3 detaillierter dargestellt sind.

Es sind, bezüglich der durch Pfeile 120 gekennzeichneten Luftstromrichtung, nur etwa in der Mitte des Obersiebs 90 insgesamt fünf Luftleitflächen 118 vorhanden. Die Luftleitflächen 118 erstrecken sich unterhalb der Drehachsen 122, um die die Sieblamellen 114 winkelverstellbar im Siebrahmen 124 gelagert sind und ragen nach unten über den Siebrahmen 124 hinaus. Die anderen, nicht mit Luftleitflächen 118 ausgestatteten Sieblamellen 124 des Obersiebs 90 sind konventionell und umfassen eine untere, sich von der Drehachse 122 nach unten erstreckende Hälfte 126 und eine obere, mit der unteren Hälfte einen Winkel einschließende Hälfte 128, die in an sich bekannter Weise wellenförmig gezahnt ausgeführt ist.

Die fünf mit Luftleitflächen 118 ausgestatteten Sieblamellen 114 weisen ebenfalls eine obere, mit der Luftleitfläche 118 einen Winkel einschließende Hälfte 128 auf, die in an sich bekannter Weise wellenförmig gezahnt ausgeführt ist. Die Luftleitfläche 118 ersetzt bei diesen Sieblamellen 114 demnach die untere Hälfte 126 und ist mit der oberen Hälfte 128 einteilig ausgeführt oder mit ihr verbunden. Wenn die Sieblamellen 114 durch einen manuellen oder motorischen Verstellantrieb (nicht eingezeichnet, s. aber EP 1 068 793 A, deren Offenbarung durch Verweis mit in die vorliegenden Unterlagen aufgenommen wird) um ihre Drehachsen 122 verschwenkt werden, bewegen sich die Luftleitflächen demnach synchron mit.

Die Luftleitflächen 118 sind in der Ausführungsform nach Figur 3 in sich flach. Die in der Luftstromrichtung 120 erste, links eingezeichnete Luftleitfläche 118 ist in vertikaler Richtung gemessen kürzer als die zweite Luftleitfläche 118, die wiederum kürzer als die dritte, mittlere Luftleitfläche 118 ist. Die vierte Luftleitfläche ist wiederum baugleich mit der zweiten Luftleitfläche und die fünfte Luftleitfläche ist baugleich mit der ersten Luftleitfläche.

Die Luftleitflächen 118 lenken jeweils einen Teil des unterhalb des Obersiebs 90 dahinströmenden Luftstroms nach oben um, wie anhand der die Luftstromrichtung 120 andeutenden Pfeile dargestellt. Dadurch erreicht ein geringerer Anteil des Luftstroms den rückwärtigen Bereich des Obersiebs 90, was dort zu einer Verminderung des Luftdrucks und der Windgeschwindigkeit führt. Diese Änderung ist in der Figur 4 dargestellt, auf deren X-Achse die Position entlang der Länge des Obersiebs 90 in Luftstromrichtung 120 dargestellt ist, während die Y-Achse den Luftdruck und die dazu proportionale Windgeschwindigkeit darstellt. Die gestrichelte Kurve zeigt den Luftdruck und die Windgeschwindigkeit bei einem Obersieb 90 nach dem Stand der Technik, d. h. ohne die Luftleitflächen 118, die zum rückwärtigen Ende des Obersiebs 90 hin ansteigen, wie oben beschrieben, während die durchgezogene Kurve den Luftdruck und die Windgeschwindigkeit bei einem erfindungsgemäßen Obersieb 90 darstellt, d. h. mit den Luftleitflächen 118. Der Luftdruck und die Windgeschwindigkeit nehmen bei dem erfindungsgemäßen Obersieb 90 nach hinten hin kontinuierlich ab. Dadurch lassen sich die Verluste (am Ende des Obersiebs 90 mit dem Kurzstroh und der Spreu auf das Feld ausgetragene Körner) des Obersiebs 90 vermindern, bzw. bei einem gegebenen Verlustniveau der Durchsatz des Obersiebs 90 vergrößern.

Bei der in Figur 3 dargestellten Ausführungsform sind die ersten drei Luftleitflächen 118 derart angeordnet, dass ihre Länge in Luftstromrichtung betrachtet zunächst anwächst. Dadurch wird zwischen den über ihnen angeordneten Öffnungsspalten zwischen den Sieblamellen 114 ein gegenüber den in Luftstromrichtung 120 davor angeordneten Öffnungsspalten vergrößerter, aufgrund der Abschattungseffekte der jeweils vorgelagerten Luftleitflächen 118 näherungsweise konstanter Luftstrom erzeugt. Stromab der dritten (längsten) Luftleitfläche nehmen die Längen der Luftleitflächen 118 wieder ab, was auch zu einer abnehmenden Intensität des Luftstroms durch die über den jeweiligen Luftleitflächen 118 angeordneten Öffnungsspalte führt.

Werden die Öffnungsspalte zwischen den benachbarten Sieblamellen 114 verändert, indem letztere um die Drehachsen 122 verschwenkt werden, bewegen sich die Luftleitflächen 118 gleichsinnig mit den unteren Hälften 126 der Sieblamellen 114. Wird der Öffnungsspalt vergrößert, wird gleichzeitig der Luftstrom durch den Öffnungsspalt an die vergrößerte Öffnung angepasst, nämlich vergrößert. Dadurch wird ein Anteil des vom Gebläse 62 bereitgestellten Luftstroms nach oben abgeleitet, so dass sich der bereits mehrfach erwähnte Luftstau am Ende des Obersiebs 90 nicht mehr ergibt. Analog wird der Luftstrom vermindert, wenn der Öffnungsspalt zwischen den Sieblamellen 114 verringert wird.

In den Figuren 5a bis 5d sind andere mögliche Ausführungsformen des Obersiebs 90 mit Luftleitflächen 118 dargestellt. In der Ausführungsform nach Figur 5a sind nur die ersten drei Luftleitflächen 118 der Ausführungsform nach Figur 3 vorhanden, während die in Luftstromrichtung 120 betrachtet vierte und fünfte Luftleitfläche 118 entfallen bzw. durch konventionelle untere Hälften 126 der Sieblamellen 114 ersetzt wurden.

Bei der Ausführungsform nach Figur 5b sind alle Luftleitflächen 118 in sich flach und gleich lang. Die Ausführungsformen nach Figur 5c und 5d beinhalten jeweils genau zwei unterschiedliche Formen von Luftleitflächen 118, von denen die Kürzeren den Längeren in Luftstromrichtung 120 vorgelagert sind. Die Luftleitflächen 118 nach Figur 5c sind löffelartig entgegen der Luftstromrichtung 120 gekrümmt, während die Luftleitflächen 118 nach Figur 5d entgegen der Luftstromrichtung 120 abgewinkelt sind.

Die dargestellten Luftleitflächen 118 ermöglichen eine Verbesserung der Längsverteilung des Luftdrucks unterhalb des Obersiebs 90. Derartige Luftleitflächen 118 könnten auch unterhalb des Untersiebs 92 eingesetzt werden, zumal an dessen Rückseite der Siebkasten ebenfalls (durch den unteren Förderboden 110) geschlossen ist und sich ähnliche Druckverhältnisse wie unter dem Obersieb 90 einstellen können. Die Luftleitbleche 112 könnten dann entfallen.

## Patentansprüche

1. Sieb (90) für eine Reinigungseinrichtung (46) eines Mähdreschers (10), mit einem Siebrahmen (124), an dem mehrere Sieblamellen (114) um eine Achse (122) drehbar gelagert sind, sowie mit mindestens einer über den Siebrahmen (124) nach unten hinausragenden, gemeinsam mit den Sieblamellen (114) um die Achse (122) bewegbaren Luftleitfläche (118) zur Umleitung eines im Betrieb unterhalb des Siebs (90) vorhandenen Luftstroms nach oben zu den Sieblamellen (114), **dadurch gekennzeichnet, dass** eine über den Siebrahmen (124) nach unten hinausragende Luftleitfläche (118) oder mehrere derartige Luftleitflächen (118) nur in einem Bereich des Siebs (90) vorhanden ist oder sind, der sich in der Luftstromrichtung (120) betrachtet näherungsweise in der Nähe der Mitte des Siebs (90) befindet.

2. Sieb (90) nach Anspruch 1, **dadurch gekennzeichnet, dass** die Luftleitfläche (118) mit einer Sieblamelle (114) verbunden oder einteilig damit ausgeführt ist.

3. Sieb (90) nach einem der Ansprüche 1 oder 2, **dadurch gekennzeichnet, dass** mehrere Luftleitflächen (118) vorhanden sind, deren Länge und/oder Form jeweils gleich oder unterschiedlich, insbesondere in Luftstromrichtung (120) anwachsend und/oder absinkend ist.

4. Sieb (90) nach einem der Ansprüche 1 bis 3, **dadurch gekennzeichnet, dass** die Luftleitfläche (118) in sich flach oder in oder entgegen der Luftstromrichtung (120) gekrümmt oder in oder entgegen der Luftstromrichtung (120) abgewinkelt ist.

5. Reinigungseinrichtung (46) mit einem Sieb (90) nach einem der Ansprüche 1 bis 4.

6. Reinigungseinrichtung (46) nach Anspruch 5, **dadurch gekennzeichnet, dass** die Luftleitfläche (118) derart geformt und angeordnet ist, dass die Windgeschwindigkeit unterhalb des Siebs (90) in der Luftstromrichtung kontinuierlich abnimmt.

7. Reinigungseinrichtung (46) nach Anspruch 5 oder 6, **dadurch gekennzeichnet, dass** an der Rückseite des Siebs (90) ein nach unten geschlossener Siebkasten angeordnet ist.

8. Reinigungseinrichtung (46) nach einem der Ansprüche 5 bis 7, **dadurch gekennzeichnet, dass** das Sieb (90) ein Obersieb ist.

9. Mähdrescher (10) mit einer Reinigungseinrichtung (46) nach einem der Ansprüche 5 bis 8.

## Claims

1. Sieve (90) for a cleaning apparatus (46) of a combine harvester (10), with a sieve frame (124) on which a plurality of sieve lamellas (114) are mounted in a manner such that they can rotate about an axis (122), and with at least one air-guiding surface (118) which projects downwards beyond the sieve frame (124), is movable about the axis (122) together with the sieve lamellas (114) and is intended for diverting an air flow, which is present below the sieve (90) during operation, upwards to the sieve lamellas (114), **characterized in that** an air-guiding surface (118) or a plurality of such air-guiding surfaces (118) projecting downwards beyond the sieve frame (124) is or are present only in a region of the sieve (90) that is located approximately in the vicinity of the centre of the sieve (90), as viewed in the air flow direction (120).

2. Sieve (90) according to Claim 1, **characterized in that** the air-guiding surface (118) is connected to a sieve lamella (114) or is formed integrally therewith.

3. Sieve (90) according to either of Claims 1 and 2, **characterized in that** there is a plurality of air-guiding surfaces (118), the length and/or shape of which increases and/or decreases identically or differently in each case, in particular in the air flow direction (120).

4. Sieve (90) according to one of Claims 1 to 3, **characterized in that** the air-guiding surface (118) is flat per se or is curved in or counter to the air flow direction (120) or is angled in or counter to the air flow direction (120).

5. Cleaning apparatus (46) with a sieve (90) according to one of Claims 1 to 4.

6. Cleaning apparatus (46) according to Claim 5, **characterized in that** the air-guiding surface (118) is shaped and arranged in such a manner that the wind speed below the sieve (90) decreases continuously in the air flow direction.

7. Cleaning device (46) according to Claim 5 or 6, **characterized in that** a downwardly closed sieve box is arranged on the rear side of the sieve (90).

8. Cleaning apparatus (46) according to one of Claims 5 to 7, **characterized in that** the sieve (90) is an upper sieve.

9. Combine harvester (10) with a cleaning apparatus (46) according to one of Claims 5 to 8.

## Revendications

1. Tamis (90) pour un dispositif de nettoyage (46) d'une moissonneuse-batteuse (10), comprenant un cadre de tamis (124), sur lequel sont montées plusieurs lamelles de tamis (114) pouvant tourner autour d'un axe (122), ainsi qu'au moins une surface de guidage d'air (118) dépassant vers le bas au-delà du cadre de tamis (124), pouvant être déplacée conjointement avec les lamelles de tamis (114) autour de l'axe (122), pour dévier un flux d'air présent pendant le fonctionnement, sous le tamis (90), vers le haut en direction des lamelles de tamis (114), **caractérisé en ce qu'**une surface de guidage d'air (118) dépassant vers le bas au-delà du cadre de tamis (124), ou plusieurs de ces surfaces de guidage d'air (118), est ou sont prévues uniquement dans une région du tamis (90) qui se trouve approximativement à proximité du centre du tamis (90), considéré dans la direction du flux d'air (120).

2. Tamis (90) selon la revendication 1, **caractérisé en ce que** la surface de guidage d'air (118) est connectée à une lamelle de tamis (114) ou est réalisée d'une seule pièce avec celle-ci.

3. Tamis (90) selon l'une quelconque des revendications 1 ou 2, **caractérisé en ce que** plusieurs surfaces de guidage d'air (118) sont prévues, dont la longueur et/ou la forme sont à chaque fois identiques ou différentes, en particulier augmentent et/ou diminuent dans la direction du flux d'air (120).

4. Tamis (90) selon l'une quelconque des revendications 1 à 3, **caractérisé en ce que** la surface de guidage d'air (118) est en soi plate ou courbée dans ou à l'encontre de la direction du flux d'air (120), ou est coudée dans ou à l'encontre de la direction du flux d'air (120).

5. Dispositif de nettoyage (46) comprenant un tamis (90) selon l'une quelconque des revendications 1 à 4.

6. Dispositif de nettoyage (46) selon la revendication 5, **caractérisé en ce que** la surface de guidage d'air (118) est formée et disposée de telle sorte que la vitesse du vent diminue en dessous du tamis (90) de manière continue dans la direction du flux d'air.

7. Dispositif de nettoyage (46) selon la revendication 5 ou 6, **caractérisé en ce qu'**une caisse de tamis fermée vers le bas est disposée au niveau du côté arrière du tamis (90).

8. Dispositif de nettoyage (46) selon l'une quelconque des revendications 5 à 7, **caractérisé en ce que** le tamis (90) est un tamis supérieur.

9. Moissonneuse-batteuse (10) comprenant un dispositif de nettoyage (46) selon l'une quelconque des revendications 5 à 8.
